# EUROPÄISCHE PATENTANMELDUNG

(11) **EP 1 783 757 A1**
(43) Veröffentlichungstag der Anmeldung: **09.05.2007**
(21) Anmeldenummer: 05110423.0
(22) Anmeldetag: 07.11.2005
(51) Int. Cl.: G11B 7/09

(54) **Gerät zum Lesen und/oder Beschreiben optischer Aufzeichnungsträger**

(71) Anmelder: DEUTSCHE THOMSON-BRANDT GMBH, 78048 Villingen-Schwenningen (DE)
(72) Erfinder: Bammert, Michael, 78739 Hardt (DE); Suzuki, Tsuneo, 78087 Mönchweiler (DE); Dupper, Rolf, 78050 Villingen-Schwenningen (DE)
(74) Vertreter: Thies, Stephan

(57) **Zusammenfassung**

Die Erfindung betrifft ein Gerät zum Lesen und/oder Beschreiben optischer Aufzeichnungsträger (2) mit einer optischen Abtasteinheit (1), die eine in zwei Freiheitsgraden (11, 12) beweglich aufgehängte Objektivlinse (4) aufweist.

Erfindungsgemäß ist vorgesehen, daß die Abtasteinheit (1) ein erstes Teilelement (10) aufweist, welches ausschließlich entsprechend des ersten Freiheitsgrades (11) beweglich aufgehängt ist, und ein zweites Teilelement (20), welches entsprechend des zweiten Freiheitsgrades (12) beweglich aufgehängt ist.

## Beschreibung

Die vorliegende Erfindung betrifft ein Gerät zum Lesen und/oder Beschreiben optischer Aufzeichnungsträger, wie beispielsweise CD, DVD oder ähnlichen.

Aus der US-B1-6,621,618 ist ein Gerät zum Lesen und/oder Beschreiben optischer Aufzeichnungsträger bekannt, welches eine optische Abtasteinheit mit einer in zwei Freiheitsgraden beweglich aufgehängten Objektivlinse aufweist.

Aufgabe der Erfindung ist es, ein verbessertes derartiges Gerät vorzuschlagen.

Erfindungsgemäß ist vorgesehen, daß die Abtasteinheit ein erstes und ein zweites Teilelement aufweist, wobei das erste Teilelement ausschließlich entsprechend des ersten Freiheitsgrades beweglich aufgehängt ist, während das zweite Teilelement entsprechend des zweiten Freiheitsgrades beweglich aufgehängt ist. Dies hat den Vorteil, daß beide Freiheitsgrade entkoppelt sind, Störeinflüsse auf die Abtasteinheit entsprechend eines Freiheitsgrades wirken sich nicht oder nur stark vermindert auf den anderen Freiheitsgrad aus.

Vorteilhafterweise entspricht der erste Freiheitsgrad einer Spurfolgerichtung, also einer Richtung parallel zur Ebene des optischen Aufzeichnungsträgers und im wesentlichen senkrecht zu Spuren des optischen Aufzeichnungsträgers, und der zweite Freiheitsgrad einer Fokussierungsrichtung, also im wesentlichen senkrecht zur Ebene des optischen Aufzeichnungsträgers. Es ist besonders vorteilhaft, gerade diese Freiheitsgrade von einander zu entkoppeln.

Erfindungsgemäß ist vorgesehen, daß das erste Teilelement ein oder mehrere Aufhängeelemente aufweist. Ein Aufhängeelement ist dabei an einer Basis befestigt, wobei das Aufhängeelement entsprechend dem ersten Freiheitsgrad beweglich und entsprechend anderer Freiheitsgrade steif ausgelegt ist. Dies hat den Vorteil einer besonders einfachen Ausgestaltung der Entkopplung der Freiheitsgrade.

Erfindungsgemäß ist weiterhin vorgesehen, daß das zweite Teilelement durch ein oder mehrere Aufhängemittel am ersten Teilelement befestigt ist, wobei das Aufhängemittel entsprechend dem zweiten Freiheitsgrad beweglich und entsprechend anderer Freiheitsgrade steif ausgelegt ist. Durch diese zweistufige Anordnung ist die gewünschte Entkopplung einfach erzielbar.

Erfindungemäß ist vorgesehen, daß das eine oder die mehreren Aufhängeelement des ersten Teilelements einen größeren Verstellweg ermöglichen als das oder die Aufhängemittel des zweiten Teilelements. Aufhängemittel beziehungsweise Aufhängeelemente sind entsprechend ausgelegt. Dies hat den Vorteil, daß sowohl ein großer Maximalverstellweg entsprechend dem ersten Freiheitsgrad ermöglicht ist, als auch ein vergleichsweise kleiner Maximalverstellweg entsprechend des zweiten Freiheitsgrades. Dies ist insbesondere dann erwünscht, wenn für den zweiten Freiheitsgrad nur ein geringerer Maximalverstellweg erwünscht ist, wie dies zum Beispiel beim Fokusaktuator im Vergleich zum Spurführungsaktuator der Fall ist. Der somit erreichte erhöhte Maximalverstellweg im Spurführaktuator ermöglicht es, auf einen separaten Grobantrieb für die Spurführung zu verzichten. Dies ist besonders bei Geräten für optische Aufzeichnungsträger kleinen Durchmessers sinnvoll.

Vorteilhafterweise sind das oder die Aufhängeelemente und/oder das oder die Aufhängemittel als Blattfeder ausgelegt. Blattfedern sind besonders einfach handhabbare und kostengünstige Elemente.

Das erste Teilelement ist vorteilhafterweise mit einem Aktuator zur Beeinflussung entsprechend des ersten Freiheitsgrades versehen und das zweite Teilelement mit einem Aktuator zur Beeinflussung entsprechend des zweiten Freiheitsgrades. Insbesondere Aktuatorspulen zum Zusammenwirken mit feststehend an der Basis angeordneten Magneten sind hierbei vorgesehen. Auch andere berührungslose Aktuatoren wie kapazitive Aktuatoren, Ultraschallmotoren oder ähnliche sind hier einsetzbar. Die räumliche Entkopplung der Aktuatorfunktionen der unterschiedlichen Freiheitsgrade vereinfacht den Aufbau des Geräts sowie die Ansteuerung der Aktuatoren.

Erfindungsgemäß ist weiterhin vorgesehen, daß das erste Teilelement eine Ausgleichsmasse aufweist, die gegenüber dem Angriffspunkt des zweiten Teilelements angeordnet ist. Dies hat den Vorteil erhöhter Stabilität durch Massenausgleich. Vorteilhafterweise ist die Ausgleichsmasse durch den Aktuator, beispielsweise Aktuatorspulen gebildet. Die Ausgleichsmasse kann alternativ auch der Dauermagnet sein, wobei dann die Spulen an der Basis angeordnet sind. Dies hat den Vorteil eines geringen Volumens der Ausgleichsmasse und einer verringerten Anzahl elektrischer Stromzuführungen auf das erste beziehungsweise zweite Teilelement.

Weitere Vorteile der Erfindung können auch der nachfolgenden Beschreibung von Ausführungsbeispielen entnommen werden. Dabei zeigen:
- Fig. 1: räumliche Ansicht einer Abtasteinheit eines erfindungsgemäßen Geräts;
- Fig. 2: weitere räumliche Ansicht entsprechend Fig. 1;
- Fig. 3: Seitenansicht gemäß Fig. 1;
- Fig. 4: Draufsicht gemäß Fig. 1;
- Fig. 5: räumliche Ansicht einer alternativen Abtasteinheit gemäß der Erfindung.

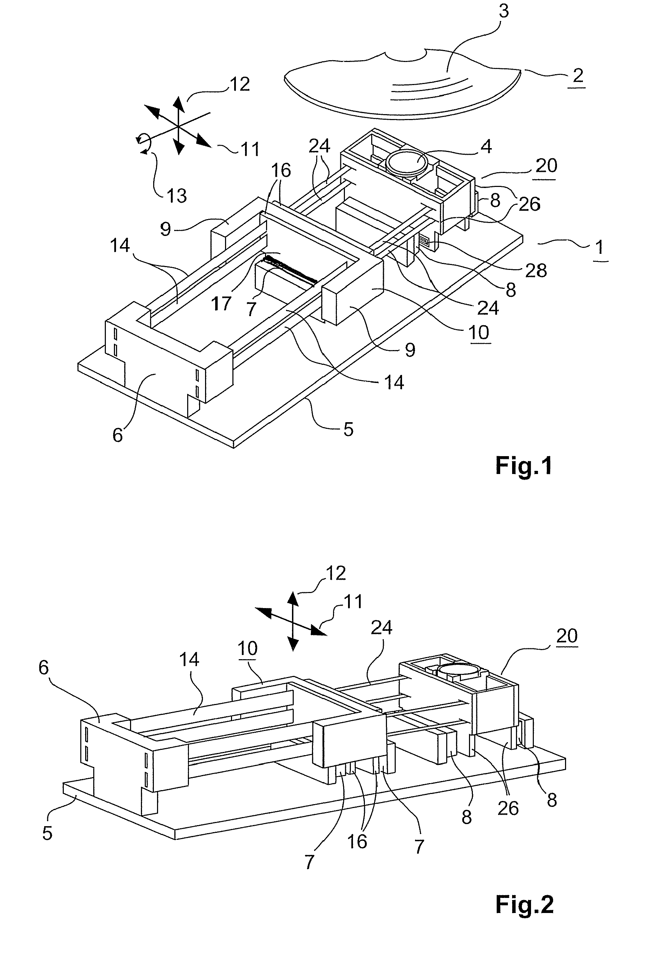

Fig. 1 zeigt eine Abtasteinheit 1 eines erfindungsgemäßen Geräts. Ein optischer Aufzeichnungsträger 2 ist teilweise dargestellt, in einer Ebene des optischen Aufzeichnungsträgers 2 verlaufende Spuren 3 des optischen Aufzeichnungsträgers sind angedeutet. Die Abtasteinheit 1 weist eine Objektivlinse 4 auf, die in mehrere Freiheitsgrade beweglich ist. Der erste Freiheitsgrad ist mittels eines Pfeils 11 angedeutet. Es handelt sich hierbei um eine Bewegung parallel zur Fläche des Aufzeichnungsträgers 2 und im wesentlichen senkrecht zu den Spuren 3, das heißt, die Spuren 3 kreuzend. Ein zweiter Freiheitsgrad ist mittels des Pfeils 12 angedeutet. Er entspricht im wesentlichen einer Bewegung senkrecht zur Oberfläche des Aufzeichnungsträgers 2. Ein dritter Freiheitsgrad ist mittels des Pfeils 13 angedeutet. Er entspricht einer Rotation um eine Achse senkrecht zu der durch Pfeil 11 und Pfeil 12 aufgespannten Ebene. Es handelt sich hierbei um eine sogenannte Tiltbewegung. Die Abtasteinheit 1 weist eine feststehende Basis 5 auf, die mit einem Halteelement 6 versehen ist. An dem Halteelement 6 ist ein erstes Teilelement 10 mittels Aufhängeelementen 14 befestigt. Die Aufhängeelemente 14 sind als Blattfedern ausgebildet. Die Kante der Blattfedern sind in der Abbildung oben beziehungsweise unten, sodaß die Aufhängeelemente 14 eine Bewegung des ersten Teilelements 10 in Richtung des Pfeils 11, also des ersten Freiheitsgrades, ermöglichen. Am ersten Teilelement 10 ist ein zweites Teilelement 20 durch Aufhängemittel 24 befestigt. Die Aufhängemittel 24 sind ebenfalls als Blattfedern ausgelegt, allerdings weisen hier die flachen Seiten nach oben beziehungsweise unten. Sie ermöglichen dadurch eine Bewegung des zweiten Teilelements 20 in Richtung des durch Pfeil 12 angedeuteten zweiten Freiheitsgrads. Das erste Teilelement 10 hat auf der dem Angriffspunkt der Aufhängemittel 24 gegenüberliegenden Seite Ausgleichsmassen 9. Es weist weiterhin Halteplatten 16 auf, die vorzugsweise als Printed Circuit Board ausgelegt sind und in ihrem unteren Bereich mit gedruckten Spulen 17 versehen sind. Die gedruckten Spulen 17 wirken mit an der Basis 5 befestigten Permanentmagneten 7 zusammen, um je nach Bestromung der Spulen 17 eine mehr oder weniger starke Kraft in Richtung des ersten Freiheitsgrades 11 auszuüben. Das zweite Teilelement 20 ist ebenfalls mit Halteplatten 26 versehen, die in ihrem unteren Bereich gedruckte Spulen 28 aufweisen. Die Spulen 28 wirken mit an der Basis 5 befestigen Permanentmagneten 8 zusammen, um eine in Fokusrichtung, also entsprechend des zweiten Freiheitsgrades 12, gerichtete Kraft auszuüben. Durch geeignete Auslegung der Spulen 28 und entsprechende Ansteuerung ist auch eine Tiltbewegung entsprechend dem dritten Freiheitsgrad 13 ermöglicht.

Fig. 2 zeigt die Abtasteinheit aus Fig. 1 aus einem anderen Blickwinkel. Man erkennt, daß das als Halter für die Linse 4 dienende zweite Teilelement 20 nicht mittels eines durchgängigen Befestigungselements mit dem Halteelement 6 und damit der Basis 5 verbunden ist, sondern zweistufig über die Aufhängeelemente 14 und die Aufhängemittel 24. Die Aufhängeelemente 14 sind länger als die Aufhängemittel 24, wodurch ein größerer Verstellweg in Richtung des Pfeils 11 als in Richtung des Pfeils 12 ermöglicht ist. Im Gegensatz zu üblichen Aufhängungen über Drähte konstanten Querschnitts, die sowohl eine größere Auslenkung in Richtung des Pfeils 11 als auch in Richtung des Pfeils 12 ermöglichen, was zu instabilem und schwingungsanfälligem Verhalten in Richtung des Pfeils 12 führen würde, ist erfindungsgemäß eine möglichst große Auslenkung in Spurfolgerichtung erreicht, also in Richtung des Pfeils 11, aber die gewohnte Stabilität in Fokusrichtung, also in Richtung des Pfeils 12, beibehalten. Der größere Verschiebebereich in Richtung des Pfeils 11 ermöglicht es, auf einen Grobantrieb eines zweistufigen Spurführungssystems zu verzichten, was Kosten- und Platzersparnis bringt. Das erfindungsgemäße Gerät zeichnet sich dadurch aus, daß durch den langen Hebelarm der Aufhängeelemente 14 eine große Bewegung in Spurfolgerichtung zustande kommt. Hierbei sind die Aktuatoreinheiten für Fokus, bestehend aus Spulen 28 und Permanentmagneten 8 sowie für Tracking, bestehend aus Spulen 17 und Permanentmagneten 7 räumlich aufgeteilt, um eine ausreichende Stabilität und eine hohe Empfindlichkeit zu erreichen. Bei der Definition des Maximalverstellwegs in Spurführungsrichtung ist man durch Variation der Magnetbreite und/oder der Rückschlußbreite im Bereich des ersten Teilelements 10 sehr flexibel. Bei dieser Konstruktion lassen sich problemlos Wege von bis zu ±7 Millimeter erreichen, was eine komplette Trackingabtastbarkeit eines optischen Aufzeichnungsträgers mit etwa 30 Millimeter Durchmesser gewährleistet. Ein weiterer Vorteil der Erfindung ist, daß bedingt durch die als Blattfedern ausgelegten Aufhängeelemente 14 eine unerwünschte Fokusbewegung und durch die ebenfalls als Blattfedern ausgelegten Aufhängemittel 24 eine unerwünschte Trackingbewegung vermieden wird. Dies trägt ebenfalls zur Stabilität des Systems bei. Die Größenverhältnisse der als Blattfedern ausgelegten Aufhängeelemente 14 und Aufhängemittel 24 sind etwa 1:5 bis 1:10 für das Verhältnis Kantenseite zu Breitseite. Da die Biegekräfte zur dritten Potenz eingehen, betragen bereits bei einem Größenverhältnis von 1:5 die Kraftverhältnisse 1:125. Dies ist ausreichend, um eine Bewegung in die unerwünschte Richtung zu unterbinden.

Man erkennt weiterhin die beidseitig der Halteplatten 16 angeordneten Permanentmagnete 7 sowie die entsprechend beidseitig der Halteplatten 26 angeordneten Permanentmagneten 8. Entsprechende Elemente zu Fig. 1 sind nicht unbedingt erneut mit Bezugszeichen versehen.

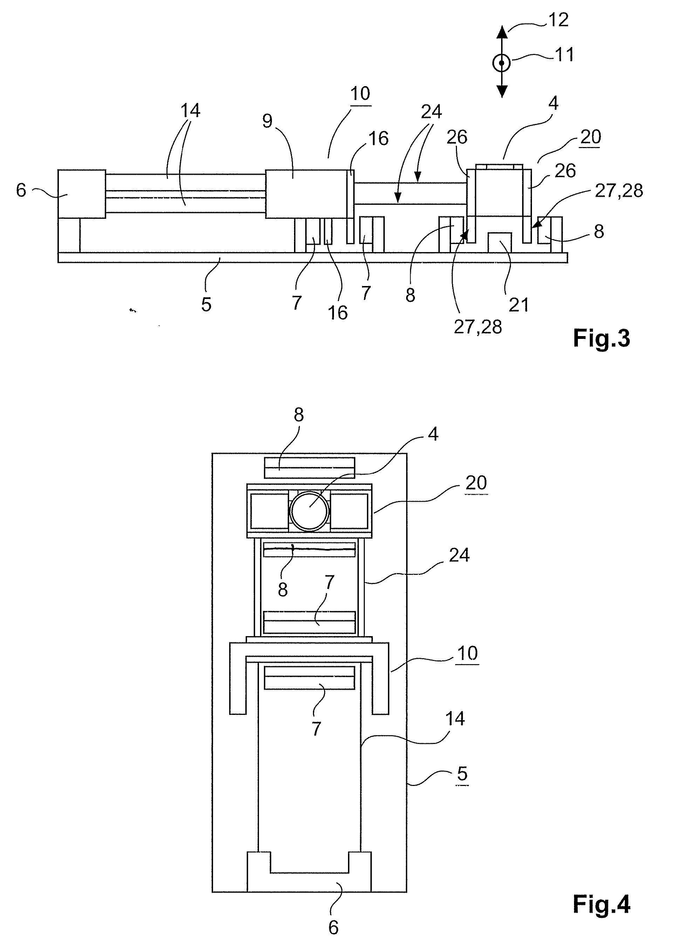

Fig. 3 zeigt eine Seitenansicht der Abtasteinheit aus Fig. 1. Im Unterschied zu Fig. 1 sind hier die Aufhängemittel 24 nicht als Blattfedern, sondern als Drähte mit rundem Querschnitt ausgelegt. Dies ermöglicht es, daß auch das zweite Teilelement 20 zusätzlich zur Fokusrichtung entsprechend Pfeil 12 auch beweglich in Spurführungsrichtung entsprechend Pfeil 11 ist. Der Maximalverstellweg in Richtung Pfeil 11 ist somit weiter vergrößert. Entsprechende Spulen 27 zusätzlich zu den Spulen 28 sind dazu an den Halteplatten 26 vorgesehen. In dieser Ausführungsform ist sozusagen der übliche Spurführungs-Grobantrieb durch die Aufhängung des ersten Teilelements 10 ersetzt, während Spurführungs-Feinantrieb und Fokusantrieb mittels des zweiten Teilelements 20 realisiert sind.

Man erkennt ebenfalls, daß die Aufhängeelemente 14 oberhalb der Oberkante der Permanentmagnete 7 liegen, sodaß sie auch bei Auslenkung des Teilelements 10 nicht in Kontakt kommen. Entsprechendes gilt für die Aufhängemittel 24, die so weit von den Permanentmagneten 8 beabstandet sind, daß auch bei maximaler Auslenkung des zweiten Teilelements 20 in Richtung des Pfeils 12 oder in Richtung des Pfeils 11 keine Kollisionsgefahr besteht. Unterhalb des zweiten Teilelements 20 erkennt man eine Optikeinheit 21, die auf der Basis 5 befestigt ist, und Lichterzeugungsmittel aufweist zum Erzeugen eines Lichtstrahls, der mittels der Objektivlinse 4 auf den hier nicht dargestellten Aufzeichnungsträger 2 fokussiert und von diesem reflektiert wird. Die Optikeinheit 21 weist weiterhin Detektorelemente zum Umwandeln des vom optischen Aufzeichnungsträger 2 reflektierten Strahls in elektrische Signale auf. Im Vergleich zu herkömmlichen Abtasteinheiten mit geringerem Trackingweg, also geringerer maximal möglicher Auslenkung bezüglich der Spur, sind die optischen Elemente der Optikeinheit 21 zu adaptieren, was ohne größere Probleme möglich ist.

Fig. 4 zeigt die Abtasteinheit aus Fig. 1 in Draufsicht. Gleiche Elemente sind mit gleichen Bezugszeichen versehen.

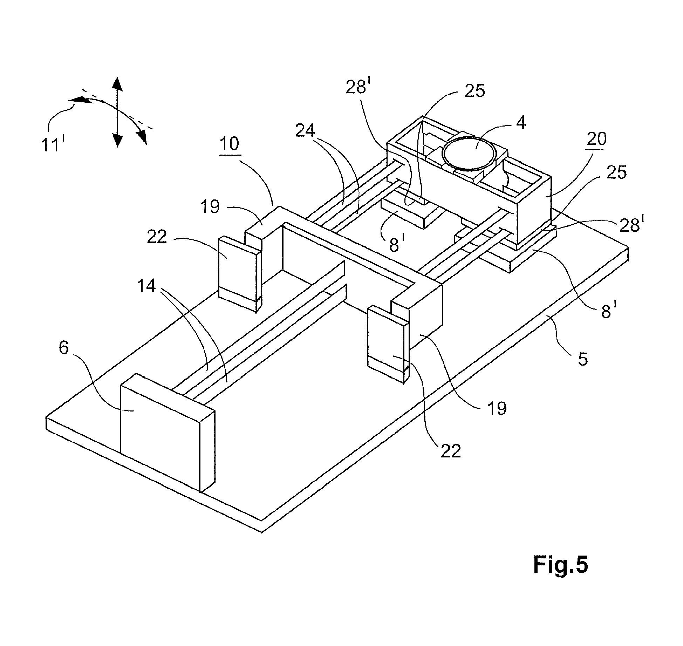

Fig. 5 zeigt eine räumliche Ansicht einer erfindungsgemäßen Abtasteinheit, in die mehrere alternative Ausführungsformen der Erfindung integriert sind. Diese müssen nicht notwendigerweise in Kombination miteinander realisiert werden, sondern können auch einzeln entsprechende Elemente der vorhergehenden Beschreibung ersetzen.

Am Halteelement 6 ist nur ein einziges Paar Aufhängeelemente 14 zur Befestigung des ersten Teilelements 10 vorgesehen. Im Gegensatz zur Parallelogrammanordnung der vorhergehenden Figuren ist hierdurch eine geringfügige Rotationsbewegung des ersten Teilelements 10 ermöglicht. Im Gegensatz zu einer Parallelbewegung wie in den vorhergehenden Figuren ermöglicht die Rotationsbewegung, daß auch die Aufhängemittel 24 als Hebelarm für die Trackingbewegung wirken und somit ein erweiteter Verschiebebereich entsprechend des hier gekrümmt angedeuteten Pfeils 11' erfolgt. Die Krümmung ist hier übertrieben dargestellt und so gewählt, daß die Abtastqualität nicht unzulässig beeinträchtigt ist.

Am ersten Teilelement 10 sind Permanentmagneten 19 als Ausgleichsmasse vorgesehen. Aufgrund der höheren Dichte des Magnetmaterials weisen sie ein kleineres Volumen als die zuvor gezeigten Ausgleichsmassen 9 auf. Die Permanentmagneten 19 wirken mit an der Basis 5 befestigten Spulen 22 zusammen, um eine Kraft auf das erste Teilelement 10 auszuüben. Zuleitungen zu den Spulen 22 sind hier nicht dargestellt, verlaufen aber vorzugsweise über die Basis 5 zum Halteelement 6. Am Teilelement 20 sind gedruckte Spulen 28' an Halteplatten 25 an der Unterseite angebracht. Diese wirken mit flächig auf der Basis 5 angeordneten Permanentmagneten 8' zusammen. Diese Anordnung ermöglicht es, einen größeren gekrümmten Verschiebeweg der zweiten Teileinheit 20 zu erlauben, ohne daß Probleme bezüglich Abstand oder Kollision mit den Permanentmagneten 8' auftreten. Diese Anordnung verhindert auch, daß sich das zweite Teilelement 20 aus dem optimalen Interaktionsbereich zwischen den Spulen 28' und den Permanentmagneten 8 herausbewegt. Alternativ dazu kann auf Spulen 28' und Permanentmagneten 8' verzichtet werden, wenn die Aufhängemittel 24 selbstverformend ausgelegt sind, zum Beispiel als Bimetallstreifen, Piezoelemente oder mit anderen mikromechanischen Aktuatoren versehen sind. Damit ist sowohl eine Verkippung in Fokusrichtung als auch in Tiltrichtung möglich.

## Patentansprüche

1. Gerät zum Lesen und/oder Beschreiben optischer Aufzeichnungsträger (2) mit einer optischen Abtasteinheit (1), die eine in zwei Freiheitsgraden (11, 12) beweglich aufgehängte Objektivlinse (4) aufweist, **dadurch** gekennzeichnt, daß die Abtasteinheit (1) ein erstes Teilelement (10) aufweist, welches ausschließlich entsprechend des ersten Freiheitsgrades (11) beweglich aufgehängt ist, und ein zweites Teilelement (20), welches entsprechend des zweiten Freiheitsgrades (12) beweglich aufgehängt ist.

2. Gerät nach Anspruch 1, **dadurch gekennzeichnet, daß** der erste Freiheitsgrad (11) einer Spurfolgerichtung entspricht und der zweiten Freiheitsgrad (12) einer Fokussierungsrichtung.

3. Gerät nach einem der Ansprüche 1 oder 2, **dadurch gekennzeichnet, daß** das erste Teilelement (10) mittels zumindest eines Aufhängelements (14) an einer Basis (5) befestigt ist, welches entsprechend dem ersten Freiheitsgrad (11) beweglich und entsprechend anderer Freiheitsgrade (12, 13) steif ausgelegt ist.

4. Gerät nach einem der vorhergehenden Ansprüche, **dadurch gekennzeichnet, daß** das zweite Teilelement (20) mittels zumindest eines Aufhängemittels (24) an dem ersten Teilelement (10) befestigt ist, welches entsprechend dem zweiten Freiheitsgrad (12) beweglich und entsprechend anderer Freiheitsgrade (11, 13) steif ausgelegt ist.

5. Gerät nach Anspruch 3 und 4, **dadurch gekennzeichnet, daß** das zumindest eine Aufhängeelement (14) des ersten Teilelements (10) einen größeren Verstellweg ermöglicht, als das zumindest eine Aufhängemittel (24) des zweiten Teilelements (20).

6. Gerät gemäß einem der Ansprüche 3 bis 5, **dadurch gekennzeichnet, daß** das Aufhängeelement (14) und/oder das Aufhängemittel (24) eine Blattfeder ist.

7. Gerät gemäß einem der vorhergehenden Ansprüche, **dadurch gekennzeichnet, daß** das erste Teilelement (10) einen Aktuator (17) zur Beeinflussung entsprechend des ersten Freiheitsgrads (11) aufweist, und das zweite Teilelement (20) einen Aktuator (28, 28') zur Beeinflussung entsprechend des zweiten Freiheitsgrads (12) aufweist.

8. Gerät nach einem der vorhergehenden Ansprüche, **dadurch gekennzeichnet, daß** das erste Teilelement (10) eine gegenüber dem Angriffspunkt des zweiten Teilelements (20) angeordnete Ausgleichsmasse (9, 19) aufweist.
